# EUROPÄISCHE PATENTSCHRIFT

(11) **EP 2 648 968 B1**
(45) Veröffentlichungstag und Bekanntmachung des Hinweises auf die Patenterteilung: **14.01.2015**
(21) Anmeldenummer: 11770710.9
(22) Anmeldetag: 15.10.2011
(51) Int. Cl.: B62D 27/02, B62D 29/00

(54) **VERBINDUNGSANORDNUNG**
CONNECTING ARRANGEMENT
SYSTÈME D'ASSEMBLAGE

(30) Priorität: 08.12.2010 DE 102010053843
(43) Veröffentlichungstag der Anmeldung: 16.10.2013
(73) Patentinhaber: Daimler AG, 70327 Stuttgart (DE)
(72) Erfinder: HÄGELE, Klaus, 73572 Heuchlingen (DE); HEISE, Wilfried, 72108 Rottenburg (DE); SALKIC, Asmir, 89077 Ulm (DE); SEIDEL, Joachim, 73257 Köngen (DE)
(74) Vertreter: JENSEN & SON
(86) Internationale Anmeldenummer: PCT/EP2011/005189
(87) Internationale Veröffentlichungsnummer: WO 2012/076074

(56) Entgegenhaltungen:
- DE-A1-102004 018 977
- DE-A1-102005 024 263
- DE-A1-102009 014 206

## Beschreibung

Die Erfindung betrifft eine Verbindungsanordnung gemäß dem Oberbegriff des Patentanspruches 1.

Eine gattungsgemäße Verbindungsanordnung ist unter anderem aus der DE 10 2004 018 977 A1 bekannt. Dort ist eine Unterbodenkonstruktion eines Kraftfahrzeuges beschrieben, die Diagonalstreben zur Versteifung aufweist. Die Streben sind endseitig mit Schraublöchern versehen und dementsprechend an den Unterboden angeschraubt.

Im Zuge des Leichtbaugedankens ist der Einsatz von faserverstärkten Kunststoffen (FVK) zur Ausbildung der Streben zwar denkbar, jedoch erwachsen zum einen bei der Verwendung von Schraubverbindungen Probleme hinsichtlich des Setzverhaltens des Kunststoffes, da aufgrund dessen Vorspannkraftverluste auftreten. Des Weiteren wird durch die Schraublöcher der Faserverlauf gestört bzw. unterbrochen und damit die Strebe geschwächt.

Der Erfindung liegt die Aufgabe zugrunde, eine Verbindungsanordnung zu schaffen, mit der erreicht werden kann, ein erstes Bauteil aus einem Leichtbaumaterial möglichst geringen Gewichts bei gleichzeitig hoher Steifigkeit mit einem zweiten aus einem Stahlwerkstoff bestehenden Bauteil prozess- und betriebssicher zu verbinden.

Die Aufgabe ist erfindungsgemäß durch die Merkmale des Patentanspruches 1 gelöst.

Aufgrund der Bereitstellung eines metallischen Zwischenstücks, das die beiden Bauteile miteinander verbindet, in dem das erste Bauteil, das aus FVK besteht, mit diesem eine unlösbare Steckverbindung eingeht, wird eine unmittelbare Schraubverbindung des ersten Bauteils mit dem zweiten umgangen. Hierdurch kommt das Setzverhalten des FVK einerseits nicht mehr zum Tragen; zum anderen wird auch der Faserverlauf nicht durch eine Bearbeitung, wie Bohren, Schneiden usw. gestört oder gar unterbrochen, die bei der Ausbildung von Öffnungen erforderlich ist. Des Weiteren werden auch damit zusammenhängende etwaige Schäden durch Delaminierung des FVK unterbunden. Aufgrund der Wahl eines metallischen Werkstoffes, vorzugsweise eines eisenhaltigen Werkstoffes für das Zwischenstück ist eine Anbindung an das zweite Bauteil, das aus einem Stahlwerkstoff besteht, relativ einfach auszuführen. Der Einsatz eines FVK-Materials für das erste Bauteil folgt in optimaler Weise dem angestrebten Leichtbau mit möglichst geringem Gewicht bei hoher Steifigkeit. Die Steckverbindung ist schnell, leicht und prozesssicher zu bewerkstelligen und erweist sich auch unter hoher mechanischer Beanspruchung als betriebssicher. Insgesamt gesehen wird durch die Erfindung eine Verbindungsanordnung für FVK-Bauteile erzielt, die einfach auszuführen ist und aus preiswerten Materialien besteht, was eine Entscheidung für eine Verbauung von FVK-Bauteilen in der Grossserie begünstigt. Weiterhin ist die Herstellung der Verbindungsanordnung sehr montagefreundlich, da das FVK-Bauteil mit dem Zwischenstück schon als vormontiertes Modul, d.h. in unlösbarer Steckverbindung angeliefert werden kann um dann am zweiten Bauteil befestigt zu werden.

Bevorzugt wird das Zwischenstück an einem Ende mit einem Befestigungsflansch ausgebildet, mittels dessen das Zwischenstück am zweiten Bauteil leicht und einfach handhabbar zu fügen ist. Hierbei sind vorteilhaft alle gebräuchlichen Fügetechniken einsetzbar. Beispielsweise ist Kleben, Schweißen, Löten, Clinchen oder auch Klipsen denkbar. Der Flansch kann ohne weiteres mit einer Öffnung ausgebildet werden, so dass das Zwischenstück und - mittelbar - auch das erste Bauteil mit dem zweiten Bauteil verschraubt werden kann. Insbesondere kann die Flanschform der Kontur des zweiten Bauteils angepasst werden, so dass auch bei komplexeren Bauteilkonturen eine problemlose sichere Befestigung des Zwischenstücks und des ersten Bauteils am zweiten Bauteil möglich ist.

Das Zwischenstück kann ein Schmiede-, Guss-, Fräs- oder Drehteil sein. Bevorzugt ist das Zwischenstück jedoch als Hülse mit einseitig zusammengepresstem Ende ausgebildet. Die Hülse kann durch ein Rohrstück als Massenware gebildet sein, welches am besagten Ende unter Bildung des Befestigungsflansches platt zusammengequetscht wird. Zur Herstellung ist es denkbar, das Rohrstück mittels eines Innenhochdruckumformverfahrens zu bearbeiten, wodurch zum einen eine optimale Querschnittsanpassung an die Steckverbindung für das erste Bauteil erreicht werden kann. Zum anderen ist es möglich, den Quetschvorgang im gleichen Werkzeug des Innenhochdruckumformens abfolgen zu lassen. Hierbei sind lediglich entsprechende in das Werkzeug integrierte Stempel erforderlich. Auch ist es möglich, die Quetschung durch das Werkzeug selbst in Zuge des Schließvorgangs des Werkzeugs auszuführen. Des Weiteren ist die Ausbildung von Schrauböffnungen im gleichen Werkzeug möglich, wobei hierbei Stanzstempel zum Einsatz kommen, die ebenfalls im Werkzeug angeordnet sind.

Besonders bevorzugt ist die unlösbare Steckverbindung mittels einer Presspassung und/oder mittels einer Klebeschicht gebildet. Die Presspassung kann durch Einpressen des einen Steckpartners in die Aufnahme des anderen Steckpartners oder durch Aufschrumpfen nach spielbehaftetem Aufschieben des einen Steckpartners auf den anderen erfolgen. Bei letzterer Technik wird das metallische Zwischenstück zumindest an seinem an der Steckverbindung anteiligen Ende stark gekühlt, anschließend erfolgt das Zusammenschieben, wonach die Verbindung erwärmt wird und sich die Presspassung infolge der Materialausdehnung des Zwischenstücks einstellt.

Alternativ oder zusätzlich kann die unlösbare Steckverbindung auch durch eine Klebeschicht gebildet werden. Hierbei werden das aufnehmende und/oder das aufzunehmende Ende der Steckpartner vorab mit der Klebeschicht ausgestattet. Die Klebeschicht kann feucht sein, wonach beim Zusammenschieben der Kleber aushärtet. Die Klebeschicht kann aber auch zuerst trocken und inaktiv sein und erst nach Zusammenschieben der Steckpartner mittels Bestrahlung aktiviert werden und ihre adhäsiven Eigenschaften entfalten und schließlich aushärten. Für eine eventuelle überschüssige Aufbringung an Klebemasse ist ein Abführkanal im Zwischenstück vorgesehen.

Besonders bevorzugt sind die steckverbundenen Enden des ersten Bauteils und des Zwischenstücks mittels eines sich über die Länge der Steckverbindung erstreckenden elektrisch isolierenden Elementes umfänglich beabstandet. Hierdurch wird eine Kontaktkorrosion des Stahlwerkstoffes des zweiten Bauteils und gegebenenfalls des metallischen Zwischenstücks unterbunden, die sich aus einem relativ hohen Unterschied der elektrochemischen Potentiale des ersten Bauteils zum zweiten Bauteil bzw. zum Zwischenstück der Verbindungsanordnung ergeben. Das elektrisch isolierende Element kann bevorzugt eine Klebeschicht und/oder eine Wicklung aus glas- oder aramidfaserverstärktem Kunststoff, also einem relativ unedlen FVK sein. Mit Verwendung der Klebeschicht wird in baulicher einfachster Weise gleichzeitig zum einen eine unlösbare Steckverbindung geschaffen und zum anderen die Kontaktkorrosion verhindert.

Die Verhinderung der Kontaktkorrosion ist besonders wichtig, wenn das erste Bauteil in bevorzugter Ausführungsform aus carbonfaserverstärktem Kunststoff besteht, welcher ein besonders edles Material darstellt. Des Weiteren ist die erfindungsgemäße Verbindungsanordnung für diesen Werkstoff wichtig, da das so gefertigte erste Bauteil besonders hohe mechanische Belastungen tragen soll und hierzu mit unidirektionalem Faserverlauf ausgebildet wird. Durch Verbindungsöffnungen im CFK-Material wäre der Faserverlauf schwerwiegend gestört und das Bauteil für den vorgesehenen Anwendungszweck nicht brauchbar. Die Verbindungsanordnung erweist sich auch gegenüber Streusalz- und Steinschlagbeaufschlagungen als korrosionsbeständig.

Obwohl im Rahmen der Erfindung der Anwendungsbereich der Verbindungsanordnung breit gestreut ist und dabei auch im Flugzeugbau angesiedelt sein kann, bildet besonders bevorzugt das erste Bauteil ein Rahmenstrukturbauteil, eine Strebe oder ein Trägerbauteil eines Kraftfahrzeugs, während das zweite Bauteil ein an das erste Bauteil angrenzendes bzw. nahe gelegenes Karosseriebauteil bildet. Hierbei wird mit dem Einsatz von FVK, vorzugsweise CFK dem Leichtbaugedanken für Kraftfahrzeuge und der damit verbundenen Senkung der Emissions- und Kraftstoffverbrauchswerte Rechnung getragen.

Im Folgenden ist die Erfindung anhand eines in der Zeichnung dargestellten Ausführungsbeispiels näher erläutert. Dabei zeigt die einzige Figur schematisch in einer Explosionsdarstellung eine erfindungsgemäße Verbindungsanordnung mit einem hülsenförmigen Zwischenstück, das an einem Ende zusammengepresst ist.

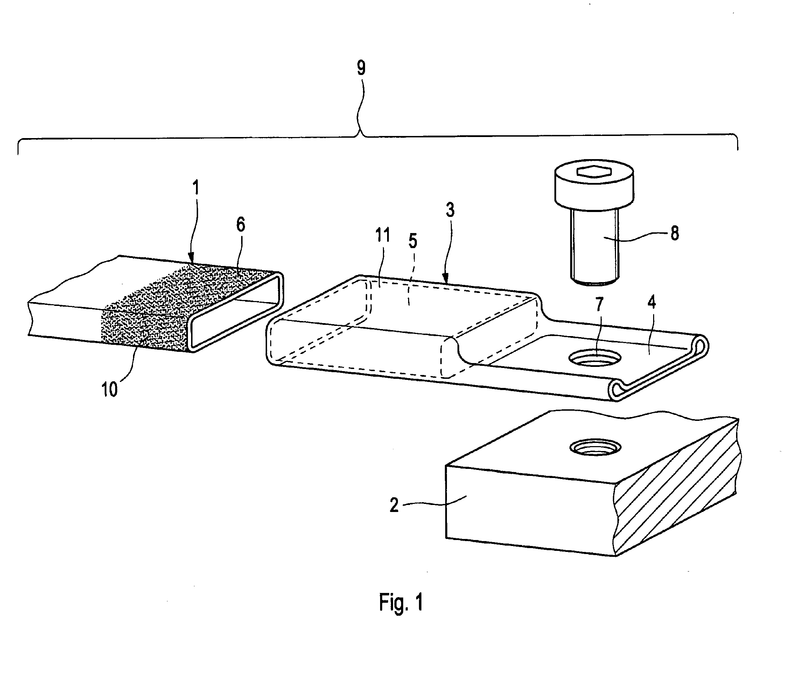

Die Fig. 1 befasst sich mit einer besonderen Anbindung eines ersten strebenförmigen Bauteils 1 an ein angrenzendes zweites Bauteil 2, welches ein Karosseriebauteil eines Kraftfahrzeugs bildet. Das strebenförmige Bauteil 1 besteht aus CFK und ist im Pultrusionsverfahren hergestellt. Das zweite Bauteil 2 besteht aus einem Stahlblech oder einem aus Blech gebildeten Hohlprofil. Hierunter sind auch gezogene Rohre zu verstehen.

Um Schwächungen des ersten Bauteils 1 durch eingebrachte Durchtrittsöffnungen zu vermeiden, wird ein hülsenförmiges metallisches Zwischenstück 3 bereitgestellt, das an einem dem Bauteil 1 abgewandten Ende 4 zusammengepresst ist. Während das zusammengepresste Ende 4 einen abstehenden Befestigungsflansch für das zweite Bauteil 2 bildet, weist das gegenüber liegende offene Ende 11 des Zwischenstücks 3 einen Aufnahmeraum 5 für das zugewandte Ende 6 des ersten Bauteils 1 auf. Es ist natürlich denkbar, dass das erste Bauteil 1 rohrförmig ausgebildet sein kann, während das Zwischenstück 3 stab- oder strebenförmig gestaltet ist, so dass der Hohlraum des ersten Bauteils 1 die Aufnahme für das entsprechende Ende des Zwischenstücks 3 bildet. Das Ende 4 des Zwischenstücks 3 weist anstelle des ersten Bauteils 1 die beschriebene Durchtrittsöffnung 7 auf, über die das Zwischenstück 3 mit dem zweiten Bauteil 2 mittels einer Schraube 8 verschraubbar ist.

Zur Herstellung der im Wesentlichen das erste Bauteil 1, das zweite Bauteil 2 und das Zwischenstück 3 beinhaltenden erfindungsgemäßen Verbindungsanordnung 9 wird zuerst das Ende 6 des ersten Bauteils 1 mit einer Klebeschicht 10 beschichtet. Anschließend wird das erste Bauteil 1 mit seinem Ende 6 in den Aufnahmeraum 5 des Zwischenstücks 3 gesteckt, wonach die Klebeschicht 10 in Kontakt mit den Wänden des Aufnahmeraums kommt und ihre Funktion entfaltet. Nach Aushärtung des Klebers entsteht zwischen dem ersten Bauteil 1 und dem Zwischenstück 3 eine hohe kraftschlüssige Verbindung, wodurch die Steckverbindung auch unter hohen mechanischen Belastungen nicht mehr lösbar ist.

Zur äquidistanten Ausrichtung des Endes 6 des ersten Bauteils 1 in dem Aufnahmeraum 5 des Zwischenstücks 3 können in der Klebeschicht 10 kleine Kugeln, vorzugsweise aus Glas, gleichen Durchmessers angeordnet sein. Des Weiteren ist es denkbar, dass ein oder mehrere Kanäle im Zwischenstück 3 im Bereich des Aufnahmeraums 5 ausgebildet sind, die von dieser nach außen führen. Dadurch ist überflüssiger Klebstoff nach außen gezielt abführbar. Hierbei ist auch möglich, über diese Kanäle erst den Klebstoff den beiden Verbindungspartnern Zwischenstück 3 und erstes Bauteil 1 zuzuführen.

Nach der Verklebung wird nun das erste Bauteil 1 mit dem Zwischenstück 3 zum zweiten Bauteil 2 geführt, wobei dieses mit dem Ende 4 des Zwischenstücks schraubbefestigt wird. Gegebenenfalls erfolgt die Schraubbefestigung über eine Buchse, die in der Durchtrittsöffnung 7 zu befestigen, beispielsweise einzupressen ist.

Anstelle des Flansches 4 kann auch am Zwischenstück 3 ein rotationssymmetrischer Stutzen ausgebildet sein, der ein Außengewinde trägt, so dass das erste Bauteil 1 mit dem Zwischenstück gemeinsam in eine Öffnung des zweiten Bauteils 2 eingeschraubt werden kann. Ferner sind am Stutzen in dem Zusammenhang Vorkehrungen zur Realisierung eines Bajonett-Verschlusses denkbar.

Zusätzlich zur Klebeverbindung und/oder der Pressverbindung ist es denkbar, eine Schnapp- oder Rastverbindung zwischen dem Zwischenstück 3 und dem Ende 6 des ersten Bauteils 1 auszubilden. Hierbei sollten die Wände des Aufnahmeraums 5 in gewissem Maße elastisch sein und Hinterschneidungen aufweisen, in die entsprechende Ausformungen des Ende 6 des ersten Bauteils 1 einschnappen bzw. einrasten kann. Hierdurch wird ermöglicht, dass die Stärke des Presssitzes verringert werden kann, da die formschlüssige Verbindung einen Anteil der Unlösbarkeit der Steckverbindung übernimmt. Durch die Verringerung der Presssitzstärke wird das Material des Zwischenstücks 3 bezüglich der Spannungsbeanspruchung dort geschont. Im Zusammenhang mit der Klebeverbindung gewährleistet die formschlüssige Verbindung das Verbleiben der beiden Steckpartner in ihrer axialen relativen Stecklage zueinander, was der Prozesssicherheit der Anbindung des ersten Bauteils 1 an das zweite Bauteil 2 zuträglich ist, wenn der Kleber noch nicht ausgehärtet ist jedoch der Steckverbund schon an das zweite Bauteil 2 herangeführt werden muss.

## Patentansprüche

1. Verbindungsanordnung (9) zwischen einem ersten und einem zweiten Bauteil (1,2), wobei das zweite Bauteil (2) aus einem Stahlwerkstoff gebildet ist, und wobei das erste Bauteil (1) aus einem faserverstäkten Kunststoff besteht
**dadurch gekennzeichnet, dass** die beiden Bauteile (1,2) mittels eines metallischen Zwischenstücks (3) verbunden sind, wobei das Zwischenstück (3) mit dem ersten Bauteil (1) unlösbar steckverbunden ist.

2. Verbindungsanordnung nach Anspruch 1,
**dadurch gekennzeichnet, dass**
das Zwischenstück (3) an einem Ende (4) einen Befestigungsflansch aufweist, mittels dessen das Zwischenstück (3) am zweiten Bauteil (2) gefügt ist.

3. Verbindungsanordnung nach Anspruch 2,
**dadurch gekennzeichnet, dass**
das Zwischenstück (3) als Hülse ausgebildet ist, das an einem Ende (4) unter Bildung des Befestigungsflansches platt zusammengepresst ist.

4. Verbindungsanordnung nach einem der Ansprüche 1 bis 3,
**dadurch gekennzeichnet, dass**
die unlösbare Steckverbindung mittels einer Presspassung und/oder mittels einer Klebeschicht (10) gebildet ist.

5. Verbindungsanordnung nach einem der Ansprüche 1 bis 4,
**dadurch gekennzeichnet, dass**
die steckverbundenen Enden (6,11) des ersten Bauteils (1) und des Zwischenstücks (3) mittels eines sich über die Länge der Steckverbindung erstreckenden elektrisch isolierenden Elementes umfänglich beabstandet sind.

6. Verbindungsanordnung nach Anspruch 5,
**dadurch gekennzeichnet, dass**
das elektrisch isolierende Element eine Klebeschicht (10) und/oder eine Wicklung aus glas- oder aramidfaserverstärktem Kunststoff ist.

7. Verbindungsanordnung nach einem der Ansprüche 1 bis 6,
**dadurch gekennzeichnet, dass**
das erste Bauteil (1) aus carbonfaserverstärktem Kunststoff mit unidirektionalem Faserverlauf besteht.

8. Verbindungsanordnung nach einem der Ansprüche 1 bis 7,
**dadurch gekennzeichnet, dass**
das erste Bauteil (1) ein Rahmenstrukturbauteil, eine Strebe oder ein Trägerbauteil eines Kraftfahrzeugs bildet und dass das zweite Bauteil (2) ein an das erste Bauteil (1) angrenzendes Karosseriebauteil bildet.

## Claims

1. Connecting arrangement (9) between a first and a second component (1, 2), wherein the second component (2) is made of a steel material and the first component (1) consists of a fibre-reinforced plastic material,
**characterised in that**
the two components (1, 2) are connected by means of a metallic connecting piece (3), the connecting piece (3) being plug-connected to the first component (1) in a non-releasable manner.

2. Connecting arrangement according to claim 1,
**characterised in that**
the connecting piece (3) has a mounting flange at one end (4), by means of which the connecting piece (3) is joined to the second component (2).

3. Connecting arrangement according to claim 3,
**characterised in that**
the connecting piece (3) is designed as a sleeve which is compressed flat at one end (4) to form the mounting flange.

4. Connecting arrangement according to any of claims 1 to 3,
**characterised in that**
the non-releasable plug connection is established by means of press-fitting and/or by means of an adhesive layer (10).

5. Connecting arrangement according to any of claims 1 to 4,
**characterised in that**
the plug-connected ends (6, 11) of the first component (1) and the connecting piece (3) are circumferentially spaced from one another by means of an electrically insulating element which extends along the length of the plug connection.

6. Connecting arrangement according to claim 5,
**characterised in that**
the electrically insulating element is an adhesive layer (10) and/or a winding made of a glass-fibre or aramid-fibre reinforced plastic material.

7. Connecting arrangement according to any of claims 1 to 6,
**characterised in that**
the first component (1) consists of a carbon-fibre reinforced plastic material with a unidirectional fibre direction.

8. Connecting arrangement according to any of claims 1 to 7,
**characterised in that**
the first component (1) is a structural frame component, a strut or a support part of a motor vehicle and the second component (2) is a body part adjoining the first component (1).

## Revendications

1. Système d'assemblage (9) entre un premier et un second élément (1, 2), le second élément (2) est en acier, **caractérisé en ce que** le premier élément (1) étant composé en matière renforcée par des fibres, et les deux éléments (1, 2) étant reliés au moyen d'une pièce intermédiaire métallique (3), la pièce intermédiaire (3) étant reliée par emboîtement au premier élément (1) de manière inamovible.

2. Système d'assemblage selon la revendication 1, **caractérisé en ce que** la pièce intermédiaire (3) présente à une extrémité une bride de fixation, qui permet d'assembler la pièce intermédiaire (3) au second élément (3).

3. Système d'assemblage selon la revendication 2, **caractérisé en ce que** la pièce intermédiaire (3) est conçu comme un manchon qui à une extrémité (4) est comprimée de manière à être aplatie par la formation de la bride de fixation.

4. Système d'assemblage selon l'une quelconque des revendications 1 à 3, **caractérisé en ce que** l'assemblage par emboîtement inamovible est formé au moyen d'un ajustage forcé et/ou au moyen d'une couche adhésive (10).

5. Système d'assemblage selon l'une quelconque des revendications 1 à 4, **caractérisé en ce que** les extrémités (6, 11) du premier élément et de la pièce intermédiaire (3) par emboîtement assemblées l'assemblage par emboîtement sont espacées sur la périphérie au moyen d'un élément électriquement isolant s'étendant sur la longueur de l'assemblage par emboîtement.

6. Système d'assemblage selon la revendication 5, **caractérisé en ce que** l'élément électriquement isolant est une couche adhésive (10) et/ou un enroulement en matière renforcée par des fibres en aramide ou de verre.

7. Système d'assemblage selon l'une quelconque des revendications 1 à 6, **caractérisé en ce que** le premier élément (1) est en matière renforcée par des fibres en carbone dont l'orientation des fibres est unidirectionnelle.

8. Système d'assemblage selon l'une quelconque des revendications 1 à 7, **caractérisé en ce que** le premier élément (1) forme un élément de structure de châssis, une entretoise ou un élément support d'un véhicule automobile et **en ce que** le second élément forme un élément de carrosserie avoisinant le premier élément (1).
